# EUROPEAN PATENT SPECIFICATION

(11) **EP 2 612 507 B1**
(45) Date of publication and mention of the grant of the patent: **23.08.2017**
(21) Application number: 11788336.3
(22) Date of filing: 30.08.2011
(51) Int. Cl.: H04Q 11/00

(54) **MODULAR KIT OF DEVICES FOR VARIABLE DISTRIBUTION, MIXING AND MONITORING OF OPTICAL SIGNALS IN THE INTERNET AND OTHER NETWORKS**
BAUKASTEN FÜR VORRICHTUNGEN ZUM VARIABLEN VERTEILEN, MISCHEN UND ÜBERWACHEN OPTISCHER SIGNALE IM INTERNET UND ANDEREN NETZWERKEN
KIT MODULAIRE DE DISPOSITIFS DESTINÉS À LA DISTRIBUTION VARIABLE, AU MÉLANGE ET À LA SURVEILLANCE DE SIGNAUX OPTIQUES DANS LE RÉSEAU INTERNET ET D'AUTRES RÉSEAUX

(30) Priority: 02.09.2010 CZ 20100657
(43) Date of publication of application: 10.07.2013
(73) Proprietor: Cesnet, Zajmove Sdruzeni Pravnickych Osob, 160 00 Praha 5 (CZ)
(72) Inventor: VOJTECH, Josef, 15600 Praha 5 (CZ); HULA, Miloslav, 27023 Krivoklát (CZ); KARASEK, Miroslav, 28000 Kolin (CZ); SIMA, Stanislav, 28500 Sazava (CZ); RADIL, Jan, 15200 Praha 5 (CZ)
(74) Representative: Duskova, Hana
(86) International application number: PCT/CZ2011/000084
(87) International publication number: WO 2012/028118

(56) References cited:
- EP-A2- 1 548 490
- WO-A2-2009/071036
- CHEN YUAN-YUAN ET AL: "Thermo-optic SOI waveguide switch matrix", PROCEEDINGS OF THE SPIE - THE INTERNATIONAL SOCIETY FOR OPTICAL ENGINEERING SPIE - THE INTERNATIONAL SOCIETY FOR OPTICAL ENGINEERING USA, vol. 7381, 2009, pages 1-7, XP002667832, ISSN: 0277-786X
- PAPADIMITRIOU G I ET AL: "Optical Switching: Switch Fabrics, Techniques, and Architectures", JOURNAL OF LIGHTWAVE TECHNOLOGY, IEEE SERVICE CENTER, NEW YORK, NY, US, vol. 21, no. 2, 1 February 2003 (2003-02-01), pages 384-405, XP011064641, ISSN: 0733-8724
- WANG Z ET AL: "Rearrangeable nonblocking thermo-optic 44 switching matrix in silicon-on-insulator", IEE PROCEEDINGS: OPTOELECTRONICS, INSTITUTION OF ELECTRICAL ENGINEERS, STEVENAGE, GB, vol. 152, no. 3, 3 June 2005 (2005-06-03), pages 160-162, XP006024094, ISSN: 1350-2433, DOI: 10.1049/IP-OPT:20059026

## Description

### Background of the Invention

Presented solution deals with a modular kit of devices for variable distribution, mixing and monitoring of optical signals in the Internet and other networks and belongs to the area of telecommunications technology and services.

### Description of Prior Art

For distribution of high-speed data streams, especially multimedia ones, current networks still use the traditional approach where data signals are converted from an optical domain to an electric domain, in which they are replicated and then they are re-converted to the optical domain. In the electric domain, the data is transformed into packets and the replication is achieved by copying such packets in memory. However, this replication in the electric domain is rather demanding, it puts devices under a considerable load resulting in rather limited volume of replicated streams as well as number of replications. On the contrary, replication in the optical domain is relatively simple but all solutions known so far achieved the condition when the insertion loss of the device, it means the replicator, corresponded to the insertion loss for maximum achievable splitting.

Monitoring of multiple optical signals typically uses directional couplers with a fixed coupling ratio followed by an optical switch, which allows for automatic measurement of multiple optical parameters by means of one or a few measuring devices. Directional couplers with fixed coupling ratios are also typically used for optical signals mixing. Variable mixing is then offered by elements operating on a wavelength basis where the wavelengths of signals being processed are fixed.

Simple switching of optical signals at present is most commonly provided by fibre switches operating on micromechanical principle. This technology is well mastered, however, given its principle; it features a life time which is limited by the number of switching actions, slower switching because a mechanical action is involved, and the devices are prone to interference by vibrations.

Switches operating on a non-mechanical principle exploit the thermal dependence of the refraction index in polymer materials where controlled heating influences the path of light in and X branches. Other switches based on a non-mechanical principle can also operate on the principle of the Mach-Zender interferometer (MZI) where the change of phase in one interferometer branch can determine to which output the input signal will be routed. Phase changes are achieved also thermally or by means of electric voltage in LiNbO₃-type materials.

In the great majority, the complete switch is realized by the interconnection of basic simple switching elements (1 input and 2 outputs or 2 inputs and 2 outputs) into a switching network, e.g. butterfly- or Benes-type network. In the past, these networks were intensively studied and they allow switching any of the inputs to any of the outputs with a minimum allocation of switching elements. Switching elements are almost always binary controlled, and therefore in a given moment the input signal can be switched only to just one output. Switching networks based on this design are not suitable for high-speed signals distribution because they do not allow signal distribution from one input to multiple outputs.

Various solutions consisting of an optical block, electronic block and communication computer are known where the optical module is formed by a grid of switching elements. However, these solutions use binary-type switching elements and therefore they allow only switching of complete signals. The signals in this case cannot be distributed into multiple outputs or mixed from multiple inputs.

There are also solutions for the distribution or collection of signal samples using switching networks, which combine splitting and switching elements, such as the solution described in WO 2009/071036 A2 CESNET ZAJMOVE SDRUZENI PRAVNICH OSOB [CZ]; VOJTECH JOSEF [CZ]; HULA MILOSLAV 11 June 2009 (2009-06-11). The optical module of such a solution is formed from two layers, the first layer contains optical splitting elements and the second layer contains optical switching elements. Since these splitting elements perform splitting with fixed ratios, it is not possible to change the splitting/mixing ratios dynamically and thus to flexibly respond to the changed needs of the optical signals distribution or monitoring.

The solution described in CHEN YUAN-YUAN ET AL: "Thermo-optic SOI waveguide switch matrix", PROCEEDINGS OF THE SPIE - THE INTERNATIONAL SOCIETY FOR OPTICAL ENGINEERING USA, vol. 7381, pages 1-7, XP002667832, ISSN: 0277-786X discloses the deployment of 2x2 MZI elements into different switching matrices, in a blocking matrix and a rearrangeably non-blocking matrix of the Benes type. Rearrangeability means that in some cases, when a new connection is added, the existing connections inside the matrix must be rerouted to accommodate the new one. During the rerouting process, the traffic on the existing connections is dropped. Furthermore, CHEN YUAN-YUAN ET AL. is silent regarding the multicasting of signals and the thermal stabilisation of the matrix.

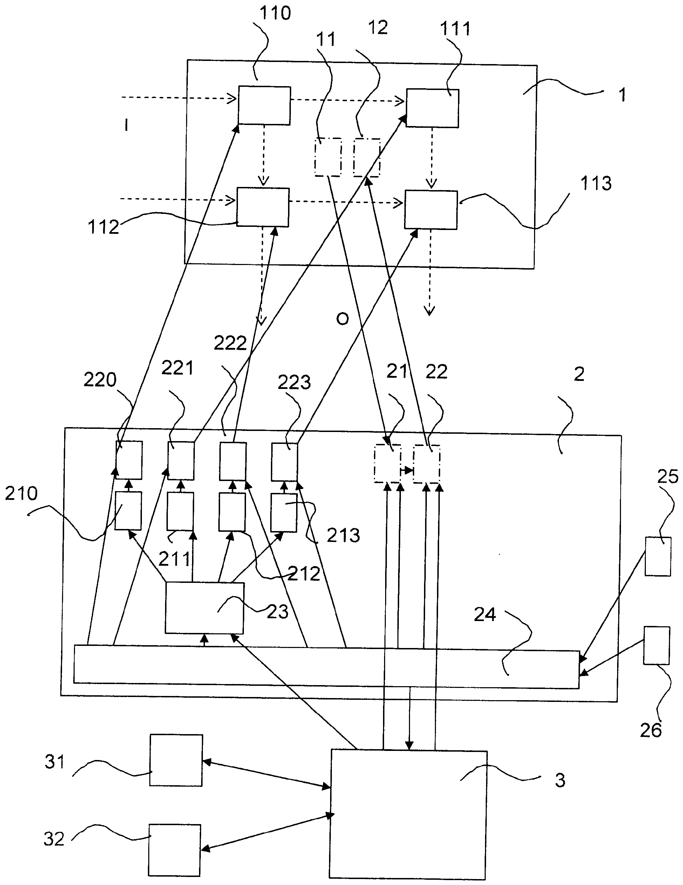

Solution described in EP 1548490 A2 Y GAL BERDUGO ET AL: "System and method for optical switch status monitoring" discloses a system for electrical monitoring of addressable electric elements used to control optical switching elements within a Planar Lightwave Chip (PLC). The switching elements of a thermo electric controlled MZI type and optional Pulse Width Modulation (PWM) duty cycle control for multicast or variable attenuation operations are mentioned here. Optional optical control of the light paths is also mentioned here. Monitoring of electric heating elements (which are controlling optical switching elements) is, according to Fig.3, conducted by measuring of electric voltage on a sensing resistor connected at source electrode of a driving FET transistor. This is done by an Analog to Digital Converter (ADC) connected to an electrical monitoring circuit. As driving FET transistors are operated from a constant voltage source, it is vital, practically, that the current through the FET driver and thus electric current passing through a heating element is measured. In the case of PLC, the whole device temperature is an important parameter (as switching elements are thermally controlled) however the solution according EP 1548490 A2 Y GAL BERDUGO ET AL, is silent regarding the whole PLC temperature measurement or stabilisation. Furthermore, the internal organisation of switching elements is not disclosed here at all.

### Summary of the Invention

Disadvantages of the device with the fixed splitting/mixing ratio mentioned above are solved by the modular kit of devices for variable distribution, mixing and monitoring of optical signals in the Internet and other networks according to the presented solution. The kit is formed by an optical module interconnected with a control electronic module with two redundant power supply sources. The control electronic module is interconnected with the communication computer module, which is equipped with a user communication interface and a machine communication interface. The control electronic module contains the power supply part distributing necessary power supply voltage also for the communication computer.

The optical module has N optical inputs and M optical outputs, where N and M are non-zero natural numbers, and in total the optical module contains NxM of optical switching elements 2x2, each with two optical inputs and two optical outputs, and one electric input, based on the MZI principle. These optical switching elements exploit the transformation of electric signal to local warming, which influences the refraction index and thus it causes changes of phase. Each MZI optical switching element has a connection for one electric input controlling the delay of time it takes for the optical signal to travel through one MZI branch; it means that the optical module has NxM of electric inputs controlling individual switching elements. The control electronic module is formed by NxM pulse-width modulators, in short PWM, which are connected via an interface module to the communication computer and to the power supply distribution block. Each of the PWM modulators is, by its output, connected to the input of one of NxM voltage drivers relevant for such a PWM modulator, where such voltage drivers are interconnected directly with the power distribution block. The output of each of the NxM voltage drivers is then connected to the electric input of one of the NxM optical switching elements.

The principle of the new solution is the fact that optical switching elements are mutually optically interconnected in a grid. Due to this fact, in the case of the classic one input to one output switching, the new solution is totally non-blocking and thus contrary to the solution CHEN YUAN-YUAN ET AL. and any of its variations which in some cases needs to rearrange the internal signal routing, thusly resulting in some traffic becoming lost. The optical module has a built-in temperature sensor located in the middle of the grid of interconnected optical switching elements, which is interconnected with a temperature measuring circuit comprised in the control electronic module adapted to allow control based on the temperature measured by the temperature measuring circuit through in the matrix of the optical switching elements. Possibly also, a thermoelectric temperature stabilizer may be placed adjacent to the sensor. The electronic module in this case contains a circuit for temperature stabilization, as completely opposed to the solution according to CHEN YUAN-YUAN ET AL. and Y GAL BERDUGO ET AL and any combination of these two. According to the new solution, the monitoring of the temperature, or even stabilisation of the temperature of the whole matrix of the optical switching elements, allows definitely a much more precise operation over a broad range of thermal conditions, because thermo-electric optical switching elements are thermally sensitive.

Optical module may be designed as integrated into a photonic integrated circuit. Likewise, the pulse-width modulators PWM may be implemented in one circuit, for instance in a gate array. In the case when the NxM number is higher than the number of the gate array output circuits, the voltage drivers are interconnected with the pulse-width modulators PWM by means of expanders.

A big advantage of this arrangement of the modular kit of devices for variable distribution, mixing and monitoring of optical signals in the Internet and other networks is that it allows both for the traditional switching of one input to one output, as well as for the distribution of signals from one input to multiple outputs. It is possible to dynamically switch between these function modes. If the device operates in the distribution mode, the ratio of the signal splitting among individual outputs may be dynamically changed. Moreover, the device can operate in a signal mixing mode when the inputs become the outputs, and vice versa. Another possible mode is the optical signals monitoring where the measured signal travels from the input to the output and, on the second output, part of its power is separated and subsequently measured. The splitting ratio may be changed dynamically contrariwise o solutions disclosed in WO 2009/071036 A2 and also in CHEN YUAN-YUAN ET AL.

### Overview of Figures in Drawings

Principle of the invention is explained below and described with the help of the attached drawing, which shows a block diagram of the device. attached drawing uses solid lines to indicate electric connections and dashed lines to indicate optical connections. Dash-and-dot lines indicate optional blocks.

In order to maintain clear orientation, the drawing shows diagram of a device with two inputs and two outputs. At present, devices with eight inputs and eight outputs and also with sixteen inputs and sixteen outputs have been tested with success.

### Detailed Description of the Preferred Embodiments

Modular kit of devices for variable distribution, mixing and monitoring of optical signals in the Internet and other networks is formed by an optical module 1, a control electronic module 2 and a communication computer module 3. The optical module 1 has N, in this case two, optical inputs marked l, and M, in this case two, optical outputs marked O and contains four optical switching elements 110 to 113 2x2 MZI-type. The used optical switching elements 110 to 113 are optically interconnected in a grid with N rows and M columns. One optical input of optical switching elements 110, 111 of the first row and one optical output of optical switching elements 111, 113 of the last column remain unconnected. These optical switching elements 110 to 113 use the transformation of electric signal to local warming, which influences the refraction index, thus causing change of phase. Optical module 1 may also have a built-in temperature sensor 11 of the whole module, for instance a thermistor, located in the middle of the grid formed by optical switching elements 110 to 113. If the temperature sensor 11 is used, a thermoelectric temperature regulator 12 may optionally also be implemented adjacent to the temperature sensor 11 to achieve better thermal stability. Advantageous embodiment is such where the complete optical module 1 is integrated into a photonic integrated circuit.

The control electronic module 2 contains NxM, in this case four, pulse-width modulators 210 to 213 where each of them is interconnected with one voltage driver 220 to 223. Outputs of voltage drivers 220 to 223 are connected to electric inputs of relevant optical switching elements 110 to 113. Control electronic module 2 may contain a temperature measuring circuit 21 for measuring the temperature of optical module 1, which is interconnected with the temperature sensor 11. The temperature measuring circuit 21 is interconnected with the temperature stabilization circuit 22, which is interconnected with the thermoelectric temperature regulator 12. Control electronic module 2 further contains an interface module 23, which is interconnected with individual pulse-width modulators 210 to 213. Control electronic module 2 further contains a power supply distribution block 24, which provides redundant power supply of the whole device. The power supply distribution block 24 is interconnected with the pulse-width modulators 210 to 213, with voltage drivers 220 to 223, with an interface module 23, with the temperature measuring circuit 21, with the temperature stabilization circuit 22 and with the first direct current power supply source module 25 and with the second direct current power supply source module 26.

Remote communication with the device plus other network functions is provided by the communication computer 3. The communication computer 3 is interconnected with the power supply distribution block 24 and with the interface module 23. The communication computer 3 is further interconnected with the user communication interface module 31 and the machine communication interface module 32 via wired and wireless interfaces, e.g. RS232, Ethernet, WI-FI, GPRS. Advantageously, the communication computer 3 has a single-board design, a fanless processor and a solid state disk, which increases mechanical resistance against vibrations.

The optical signal, or signals respectively, which should be distributed, is/are led to the inputs l of the optical module 1, it means always to the first optical switching element in a row of the created grid structure, in this case to optical switching elements 110 and 112. The optical switching element 110 or 112, depending on to which of them the signal is led, allows to transfer part of the optical signal power to the first column and through it subsequently to the first optical output. The remaining power is then further led in a given row, where its part can again be routed to another column and thus to another optical output, in this case by means of the optical switching element 111 and/or 113.

Optical switching elements 110 to 113 are electrically controlled, electric signal is converted by heat effect to a phase change and this change subsequently influences whether the signal further travels in a row or whether it is routed to a column. Electric control operates in the following manner: by means of the interface module 23 a number corresponding to the mark-to-space ratio 0-100% is written into each pulse-width modulator 210 to 213. Pulse-width modulator 210 to 213 then generates a signal with this mark-to-space ratio, which controls relevant voltage driver 220 to 223, which subsequently switches the electric input of given optical switching element 110 to 113.

The fitted electric temperature sensor 11 in interaction with the temperature measuring circuit 21 it measures temperature in the matrix of the optical switching elements 110 to 113.

If the thermoelectric temperature stabilizer 12 is fitted, then the temperature stabilization circuit 22 in interaction with the temperature measuring circuit 21 maintains the temperature of the optical switching elements 110 to 113 constant.

If the device is used for mixing, it operates in reverse direction. Signals to be mixed are led to the outputs O where their proportional parts can be selected and these are transferred to relevant row and there they exit at one or more inputs I.

In one advantageous embodiment the pulse-width modulators 210 to 213 are implemented in a gate array. If NxM is a high number, higher than the number of the gate array output circuits, expanders may be fitted to the gate array outputs and only to their outputs the voltage drivers 220 to 223 are connected.

### Industrial Applicability

This technical solution has very good industrial applicability, in particular for variable distribution, monitoring and mixing of high-speed optical signals, both in operational as well as in laboratory environments. As opposed to traditional solutions it offers minimum latencies and variable splitting/mixing ratios without the need for manual control.

## Claims

1. Modular kit of devices for variable distribution, mixing and monitoring of optical signals in the Internet and other networks formed by optical module (1) interconnected with the control electronic module (2) of the electronic system with two redundant power supply sources (25, 26), which is further interconnected with the communication computer module (3) while the communication computer module (3) is equipped with the user communication interface (31) and the machine communication interface (32) **characterized in that** the control electronic module (2) is formed by NxM pulse-width modulators (210) to (213) connected via an interface module (23) to the communication computer module (3) and to the power supply distribution block (24) and by MxN voltage drivers (220) to (223) which are interconnected directly with the power supply distribution block (24) also and the optical module (1) has N optical inputs and M optical outputs where N and M are non-zero natural numbers, and in total the optical module (1) contains NxM of optical switching elements (110) to (113) 2x2 type Mach-Zender interferometer, each with two optical inputs and two optical outputs and one electric input, while each of the NxM pulse-width modulators (210) to (213) is by its output connected to the input of one of NxM voltage drivers (220) to (223) relevant for such pulse-width modulators (210) to (213), and where the output of each of these NxM voltage drivers (220) to (223) is connected to the electric input of one of NxM optical switching elements (110) to (113), the optical switching elements (110) to (113) are mutually optically interconnected in a grid and the optical module (1) is equipped with a temperature sensor (11) located in the middle of the grid of interconnected optical switching elements (110) to (113) and is interconnected with a temperature measuring circuit (21) comprised in the control electronic module (2) adapted to allow control of the temperature in the matrix of the optical switching elements (110) to (113) based on the temperature measured by this temperature measuring circuit (21)

2. Modular kit according to claim 1 **characterized in that** adjacent to the temperature sensor (11) is located a thermoelectric regulator (12) interconnected with the temperature stabilization circuit (22), which is interconnected with the temperature measuring circuit (21), adapted to allow stabilization of optical module (1) temperature.

3. Modular kit according to the claim 1 or 2 **characterized in that** the optical module (1) is integrated into a photonic integrated circuit.

4. Modular kit according to any of claims 1 to 3 **characterized in that** the pulse-width modulators (210) to (213) are implemented in a single circuit in the gate array.

5. Modular kit according to any of claims 1 to 4 **characterized in that** in the case when the NxM is number higher than the number of the gate array output circuits, the voltage drivers (220) to (223) are interconnected with the pulse-width modulators (210) to (213) by means of expanders.

## Patentansprüche

1. Modularer Baukasten des Gerätes für variable Verteilung, Mischung und Überwachung der optischen Signale im Internet, sowie in anderen Netzwerken, der aus dem optischen Modul (1) besteht, das mit dem elektronischen Steuermodul (2) des elektronischen Systems mit zwei redundanten Quellen (25, 26) verbunden ist, das weiter mit einem Modul des Kommunikationsrechners (3) verbunden ist, wobei das jeweilige Modul des Kommunikationsrechners (3) mit einer Schnittstelle (31) für Kommunikation mit dem Benutzer, sowie mit einer Schnittstelle (32) für die Maschinenkommunikation versehen ist, **dadurch gekennzeichnet, dass** das elektronische Steuermodul (2) aus NxM der Impulsbreitenmodulatoren (210) bis (213), die über das Schnittstellenmodul (23) an das Modul des jeweiligen Kommunikationsrechners (3) und an die Einheit (24) der Einspeisungsverteilung angeschlossen sind, sowie aus MxN der Spannungserreger (220) bis (223) besteht, die ebenfalls unmittelbar mit der Einheit (24) der Einspeisungsverteilung verbunden sind, und das optische Modul (1) verfügt über N der optischen Eingänge und M der optischen Ausgänge, wo N und M natürliche, ungleiche Null Zahlen sind, und das optische Modul (1) NxM der optischen Schaltelemente (110) bis (113) des Typs Mach-Zehnder-Interferometer 2x2, mit jeweils zwei optischen Eingängen, jeweils zwei optischen Ausgängen und jeweils einem elektrischen Eingang, beinhaltet, wobei jeder von NxM der Impulsbreitenmodulatoren (210) bis (213) durch seinen Ausgang an den Eingang eines der Spannungserreger (220) bis (223), der für diesen zugehörig ist, angeschlossen ist, und wo der Ausgang von jedem dieser NxM der Spannungserreger (220) bis (223) an den elektrischen Eingang eines der NxM der optischen Schaltelemente (110) bis (113) angeschlossen ist, die optischen Schaltelemente (110) bis (113) zu einem Gitter miteinander verbunden sind und das optische Modul (1) mit einem Temperaturfühler (11) versehen sind, der sich in der Mitte des Gitters der verbundenen optischen Schaltelemente (110) bis (113) befindet, und mit dem Kreis (21) für die Temperaturmessung verbunden ist, der im elektronischen Steuermodul (2) verfügbar ist, das an die Regulierung der Temperatur in der Matrix der optischen Schaltelemente (110) bis (113) angepasst ist, die sich aus der mit diesem Kreis (21) gemessenen Temperatur, der zur Temperaturmessung dient, ergibt.

2. Modularer Baukasten nach dem Anspruch 1, **dadurch gekennzeichnet, dass** in der Nähe des Temperaturfühlers (11) ein thermoelektrischer Regler (12) angebracht ist, der mit dem Kreis (22) für Temperaturstabilisierung verbunden ist, der mit dem Kreis (21) für die Temperaturmessung verbunden ist, der so angepasst ist, um die Temperaturstabilisierung des optischen Moduls (1) zu ermöglichen.

3. Modularer Baukasten nach dem Anspruch 1 oder 2, **dadurch gekennzeichnet, dass** das optische Modul (1) in den photonischen Einbaukreis integriert ist.

4. Modularer Baukasten nach jedwedem der Ansprüche 1 bis 3, **dadurch gekennzeichnet, dass** die Impulsbreitenmodulatoren (210) bis (213) in einem Kreis in FPGA implementiert sind.

5. Modularer Baukasten nach jedwedem der Ansprüche 1 bis 4, **dadurch gekennzeichnet, dass** im Falle, wenn die NxM-Zahl höher als die Anzahl der FPGA-Ausgangskreise ist, sind die Spannungserreger (220) bis (223) mit den Impulsbreitenmodulatoren (210) bis (213) durch die Expander verbunden.

## Revendications

1. Système modulaire des dispositifs pour une distribution, mélange et surveillance variable des signaux optiques dans l'Internet et d'autres réseaux formé par un module (1) optique interconnecté avec un module (2) de commande électronique du système électronique avec deux sources (25, 26) d'alimentation redondantes, qui est ensuite interconnecté avec un module (3) de l'ordinateur de communication, où le module (3) de l'ordinateur de communication est équipé de l'interface (31) utilisateur et de l'interface (32) homme-machine **dont la caractéristique essentielle est que** le module (2) de commande électronique est formé par NxM modulateurs (210) à (213) de largeur d'impulsion connectés via un module (23) d'interface au module (3) de l'ordinateur de communication et au bloc (24) de distribution d'alimentation et par MxN excitateurs de tension (220) à (223), qui sont interconnectés directement aussi avec le bloc (24) de distribution d'alimentation et le module (1) optique contient N d'entrées optiques et M sorties optiques, où N et M sont des nombres naturels non nuls et le module (1) optique contient au total NxM éléments (110) à (113) de commutation optiques 2x2 de type de l'interféromètre de Mach-Zehnder, chacun aves deux entrées optiques, deux sorties optiques et une entrée électrique, où chacun des NxM modulateurs (210) à (213) de largeur d'impulsion est par sa sortie connecté à l'entrée d'un des excitateurs de tension (220) až (223) lui correspondant, et où la sortie de chaque de ces NxM excitateurs de tension (220) à (223) est connectée à l'entrée électrique d'un des NxM éléments (110) à (113) de commutation optiques, les éléments (110) à (113) de commutation optiques sont interconnectés mutuellement en grille et le module (1) optique est équipé par un capteur (11) de température situé au milieu de la grille des éléments (110) à (113) de commutation optiques interconnectés et est interconnecté avec le circuit (21) de mesure de température compris dans le module (2) de commande électronique adapté pour permettre la commande de la température dans la matrice des éléments (110) à (113) de commutation optiques, basée à la température mesurée par ce circuit (21) de mesure de température.

2. Système modulaire selon la revendication 1 **dont la caractéristique essentielle est qu'**à proximité du capteur (11) de température il est placé un régulateur (12) thermoélectrique interconnecté avec le circuit (22) de stabilisation de température, qui est connecté avec le circuit (21) de mesure de température adapté de façon à permettre la stabilisation de la température du module (1) optique.

3. Système modulaire selon les revendications 1 ou 2 **dont la caractéristique essentielle est que** le module (1) optique est intégré dans un circuit intégré photonique.

4. Système modulaire selon n'importe quelle des revendications 1 à 3 **dont la caractéristique essentielle est que** les modulateurs (210) à (213) de largeur d'impulsion sont implémentés dans un seul circuit dans la matrice de portes.

5. Système modulaire selon n'importe quelle des revendications 1 à 4 **dont la caractéristique essentielle est que** dans le cas où NxM est un numéro supérieur au nombre de circuits de sortie de la matrice de portes, les excitateurs de tension (220) à (223) avec les modulateurs (210) à (213) de largeur d'impulsion sont interconnectés à l'aide des expandeurs.
